# EUROPEAN PATENT SPECIFICATION

(11) **EP 3 299 492 B1**
(45) Date of publication and mention of the grant of the patent: **02.08.2023**
(21) Application number: 16796389.1
(22) Date of filing: 12.05.2016
(51) Int. Cl.: C23C 24/04, B23K 1/20, B23K 35/26, C22C 19/03, B23K 35/30

(54) **SOLDER CONNECTION STRUCTURE, FILM FORMING METHOD AND ITS USE**
LÖTVERBINDUNGSSTRUKTUR, FILMBILDUNGSVERFAHREN UND SEINE VERWENDUNG
STRUCTURE DE RACCORDEMENT PAR BRASURE, PROCÉDÉ DE FORMATION DE FILM ET SON UTILISATION

(30) Priority: 18.05.2015 JP 2015101235
(43) Date of publication of application: 28.03.2018
(73) Proprietor: Tatsuta Electric Wire & Cable Co., Ltd., Higashiosaka-shi, Osaka 578-8585 (JP)
(72) Inventor: HIRANO, Masaki, Kizugawa-shi Kyoto 619-0216 (JP)
(74) Representative: Bittner, Thomas L.
(86) International application number: PCT/JP2016/064122
(87) International publication number: WO 2016/185996

(56) References cited:
- JP-A- 2011 212 684
- JP-A- 2013 125 952
- US-A1- 2011 244 262
- J.F. LI ET AL: "Characterization and solderability of cold sprayed Sn-Cu coatings on Al and Cu substrates", SURFACE AND COATINGS TECHNOLOGY, vol. 204, no. 9-10, 1 January 2010 (2010-01-01), pages 1395-1404, XP055330475, AMSTERDAM, NL ISSN: 0257-8972, DOI: 10.1016/j.surfcoat.2009.09.025
- LI J.F. ET AL.: 'Characterization and solderability of cold sprayed Sn-Cu coatings on Al and Cu substrates' SURF COAT TECHNOL vol. 204, no. 9-10, 25 January 2010, pages 1395 - 1404, XP055330475

## Description

The present invention relates to (i) a solder connection structure to be connected with a member via a solder material and (ii) a film forming method for forming a metal film on an aluminium base material.

### Background

It is being demanded in recent years that an electrical component be, for example, smaller, lighter, higher in performance, and more reliable. Examples of the electrical component include an electric power source, a cell, a circuit board, and a connector. Generally, cold spray, a screw, soldering, welding, or the like is used to connect such an electrical component to a substrate, a terminal, or the like.

Patent Literature 1 discloses the following arrangement. Specifically, metal layers each of which is made of an electrically conductive metal that is easily soldered are provided at regular intervals on a part of a surface of a belt-shaped flat conductor that is made of aluminium or an aluminium alloy. Then, an insulative resin film is attached to either side of the flat conductor between the respective metal layers. The electrically conductive metal can be any of Ni, Sn, Au, Zn, Ag, and Cu, or a combination thereof. The metal layer is formed by cold spray or the like.

Patent Literature 2 discloses a radiator. The radiator includes plated layers obtained by coating a surface of an aluminum member with Ni and Sn. According to the radiator, the plated layers are provided so that Ni has a weight ratio of not less than 0.18% and not more than 0.48% relatively to an entirety of the radiator and Sn has a weight ratio of not less than 0.10% and not more than 0.38% relatively to the entirety of the radiator. According to the radiator, the plated layer is coated with a urethane resin so that the urethane resin has a weight ratio of not less than 0.01% and not more than 0.08% relatively to the entirety of the radiator.

Patent Literature 3 discloses a soldering composition. The soldering composition contains a first metal component and a second metal component without containing lead. The first metal component has a melting point of not less than 183°C and not more than 260°C. A kind of the second metal component and a relative amount of the first metal component and the second metal component allow an alloy having a melting point of not less than 260°C and not more than 1500°C to be formed by diffusion of the second metal component into the first metal component which is in a molten state. Patent Literature 3 takes, as an example of the first metal component, Sn alone or an alloy of two or more kinds of metallic elements selected from the group consisting of Sn, Ag, Cu, In, Bi, Sb, Zn, and Ni.

Patent Literature 4 discloses a solder composition that contains a mixture of Ni particles and Sn particles as a metal body filler.

### Citation List

[Patent Literature 1] Japanese Patent Application Publication, Tokukai, No. 2012-3877 (Publication Date: January 5, 2012)
[Patent Literature 2] Japanese Patent Application Publication, Tokukai, No. 2012-94595 (Publication Date: May 17, 2012)
[Patent Literature 3] Japanese Patent Application Publication, Tokukai, No. 2002-254195 (Publication Date: September 10, 2002)
[Patent Literature 4] Japanese Patent Application Publication, Tokukai, No. 2014-72398 (Publication Date: April 21, 2014)

Note, however, that the techniques disclosed in Patent Literatures 1 to 4 have the following problems.

According to the technique disclosed in Patent Literature 1, an Ni layer is formed, by a cold spray method, on the surface of the belt-shaped flat conductor that is made of aluminium or an aluminium alloy. Note, however, that since Ni whose film is formed by the cold spray method has a low surface density, such an Ni film has insufficient solder wettability.

According to the technique disclosed in Patent Literature 2, the Ni plated layer and the Sn plated layer are formed, in this order, on the surface of the aluminum member. This requires much time and cost. Further, in the technique disclosed in Patent Literature 2, no cold spray technique is used. Thus, the technique disclosed in Patent Literature 2 makes it impossible to enjoy an advantage of cold spray, i.e., an advantage of enabling partial processing.

The techniques disclosed in Patent Literatures 3 and 4 each relate to a soldering composition, and neither of the techniques disclosed in Patent Literatures 3 and 4 relates to a solder connection structure to be connected with a member via a solder material. Thus, neither of the techniques disclosed in Patent Literatures 3 and 4 provides a solder connection structure that enhances solder wettability.

Further, examples of a technique that is generally used to join (connect) dissimilar metals include a screw, soldering, and various welding techniques. Note, however, that corrosion may be caused depending on a material of a metal. For example, an aluminium base material and a copper wire which are screwed to each other may cause galvanization and consequently cause corrosion of the aluminium base material. Further, fixation by welding of an aluminium base material and a metallic material different from the aluminium base material requires a step of, for example, removing an oxide film. This requires much time and cost.

The document US 2011 / 244262 A1 discloses a metal bonding member having a solder layer formed on at least a part of the surface of a metal substrate. The metal bonding member has an adhesion layer formed of metal particles having an excellent wettability with the solder layer in the interface between the solder layer and the metal substrate. The adhesion layer is partially buried in the metal substrate to form an anchor layer.

The document J.F. Li et al.: Characterization and solderability of cold sprayed Sn-Cu coatings on Al and Cu substrates, Surface and Coatings Technology, vol. 204, no. 9-10, pages 1395-1404, Amsterdam, NL, 2010, describes that cold sprayed Sn-Cu coatings approximately 40 and 25 µm in average thickness were deposited on aluminium and direct bonded copper (DBC) substrates respectively Both a statistical analysis of coating thickness and a roughness analysis of the coating /substrate interface and the coating surface were carried out for the as-sprayed coatings using scanning electron microscope images.

According to the document JP 2013 125952 A, a semiconductor device in which a circuit board composed of Al or an Al alloy and a semiconductor element are connected via a solder layer, comprises a metal powder layer formed by lamination of metal powder composed of Ni, Cu, Ag, Au or an alloy of any of the metals, which is sandwiched between the circuit board and the solder layer. The metal powder layer includes groove strips traversing the metal powder layer on a surface on the solder layer side.

### Summary

In view of the problems, the present invention has an object to provide (i) a solder connection structure for enhancing solder wettability and (ii) a film forming method, carried out so as to enhance solder wettability, for forming a metal film on an aluminium base material.

In order to attain the object, a solder connection structure and a method for producing a solder connection structure as well as a use of the solder connection structure in accordance with the present invention as defined in the appended claims are provided.

Generally, a solder connection structure is disclosed herein, which is a solder connection structure for connection with a member via a solder material, including: an aluminium base material; and a metal film provided on the aluminium base material, the metal film being formed by a cold spray method in which a mixed powder material is used, the mixed powder material being a mixture of nickel (Ni) powder and a tin (Sn) powder. The mixed powder material contains the Ni powder in a weight ratio of not less than 80% and not more than 95%.

The solder connection structure in accordance with an embodiment of the present invention which solder connection structure includes the above feature and the method in accordance with an embodiment of the present invention yield the following effects. Specifically, in a case where the mixed powder material is cold sprayed onto the aluminium base material, Sn, which is contained in the second (Sn) powder material, is more likely to be in a semi-molten state than ingredients of the Ni powder material, which ingredients are higher in melting point than Sn. Thus, Sn (i) enters a space between respective particles constituting the ingredients of the first powder material so as to carry out a function of coupling the particles, and (ii) allows the metal film to be a continuous film that has fewer irregularities.

With the arrangement, the solder connection structure in accordance with an embodiment of the present invention and the method in accordance with an embodiment of the present invention can further enhance solder wettability than the following solder connection structures (1) and (2):
(1) a solder connection structure in which only the first powder material is cold sprayed onto the aluminium base material; and
(2) a solder connection structure in which onto the aluminium base material, the first powder material is cold sprayed first and subsequently the second powder material is cold sprayed

The solder connection structure in accordance with an embodiment of the present invention which solder connection structure includes the above feature and the method in accordance with an embodiment of the present invention which film forming method includes the above feature can further enhance solder wettability. Specifically, in a case where the mixed powder material is cold sprayed onto the aluminium base material, Sn, which is contained in the second (Sn) powder material, is more likely to be in a semi-molten state than the ingredients of the Ni powder material, which ingredients are higher in melting point than Sn. Thus, Sn (i) enters a space between respective particles constituting the ingredients of the first powder material so as to carry out a function of coupling the particles, and (ii) allows the metal film to be a continuous film that has fewer irregularities.

In addition, the Ni powder material which has a weight ratio of not less than 80% and not more than 95% relatively to the mixed powder material allows a density of the Ni powder material to be maintained at a high level in the metal film. Further, a layer made of the Ni powder material is covered with a layer made of the second (Sn) powder material. This also makes it possible to prevent an oxide from being generated in the layer made of the Ni powder material. For the above reasons, the solder connection structure in accordance with an embodiment of the present invention and the film forming method in accordance with an embodiment of the present invention can further enhance solder wettability.

An aspect of the present invention makes it possible to provide (i) a solder connection structure for enhancing solder wettability and (ii) a film forming method, carried out so as to enhance solder wettability, for forming a metal film on an aluminium base material.

### Description of further embodiments

Following, embodiments, by way of example, are described with reference to figures. While various examples are described for illustration purposes, according to the present invention the first powder material is Ni powder, the second powder material is Sn powder, and the mixed powder material contains the Ni powder in a weight ratio of not less than 80% and not more than 95%. In the figures show:
- Fig. 1: is a view schematically illustrating a cold spray device in accordance with an embodiment of the present invention.
- Fig. 2: is a flowchart of formation of a metal film on an aluminium substrate.
- Fig. 3: is a view schematically illustrating a solder connection structure in which a metal film is provided on an aluminium substrate.
- Fig. 4: is a view schematically illustrating a solder connection structure in accordance with Comparative Example 1.
- Fig. 5: is a view schematically illustrating a solder connection structure in accordance with Comparative Example 2.
- Fig. 6: is a photograph showing a state of a solder connection structure in accordance with an embodiment of the present invention which solder connection structure has been immersed in an Sn bath for 5 seconds (Ni to Sn weight ratio=95:5).
- Fig. 7: is a photograph showing a state of a solder connection structure in accordance with Comparative Example 1 which solder connection structure has been immersed in the Sn bath for 5 seconds.
- Fig. 8: is a photograph showing a state of a solder connection structure in accordance with Comparative Example 2 which solder connection structure has been immersed in the Sn bath for 5 seconds.
- Fig. 9: is a photograph showing a state of the solder connection structure in accordance with an embodiment of the present invention which solder connection structure has been immersed in the Sn bath for 5 seconds (Ni to Sn weight ratio=90:10).
- Fig. 10: is a photograph showing a state of the solder connection structure in accordance with an embodiment of the present invention which solder connection structure has been immersed in the Sn bath for 5 seconds (Ni to Sn weight ratio=80:20).
- Fig. 11: is a photograph showing a state of the solder connection structure in accordance with an embodiment of the present invention which solder connection structure has been immersed in the Sn bath for 5 seconds (Ni to Sn weight ratio=60:40).
- Fig. 12: is a photograph showing a state of the solder connection structure in accordance with an embodiment of the present invention which solder connection structure has been immersed in the Sn bath for 5 seconds (Ni to Sn weight ratio=98:2).
- Fig. 13: is a view schematically illustrating a state of adhesion of Sn to the solder connection structure before and after immersion of the solder connection structure in accordance with Comparative Example 1 in the Sn bath for 5 seconds.
- Fig. 14: is a view for explaining that higher solder wettability is obtained in a case where Sn powder is contained in mixed powder of Ni powder and the Sn powder in a weight ratio that falls within a predetermined range.
- Fig. 15: is a view for explaining that lower solder wettability is obtained in a case where the Sn powder is contained in the mixed powder of the Ni powder and the Sn powder in a weight ratio that is higher than the predetermined range.

Embodiments are described below with reference to the drawings. In the following description, identical components and identical constituent elements are given respective identical reference signs. Such components and constituent elements are also identical in name and function. Thus, a specific description of those components and constituent elements is not repeated.

In recent years, a film forming method that is called a cold spray method has been used. The cold spray method is a method for (1) causing a carrier gas whose temperature is lower than a melting point or a softening temperature of metallic powder, of which a metal film is to be made, to flow at a high speed, (2) introducing the metallic powder into the flow of the carrier gas and then increasing the speed of the carrier gas into which the metallic powder has been introduced, and (3) forming the metal film by causing the metallic powder to collide with, for example, a substrate at a high speed while the metallic powder is in a solid phase.

A principle of film formation by the cold spray method is understood as below.

A collision speed of not less than a certain critical value is required for metallic powder to adhere to and accumulate on a substrate so as to form a film. Such a collision speed is referred to as a critical speed. In a case where the metallic powder collides with the substrate at a speed that is less than the critical speed, the substrate is worn, so that small crater-shaped cavities are merely formed in the substrate. The critical speed is changed by, for example, a material, a size, a shape, a temperature, and/or an oxygen content of the metallic powder, or a material of the substrate.

In a case where the metallic powder collides with the substrate at a speed that is not less than the critical speed, plastic deformation caused by a great shearing force occurs near an interface between the metallic powder and the substrate (or the film which has already been formed). The plastic deformation and generation of a great shock wave in a solid due to the collision cause an increase in temperature near the interface. In the above process, solid phase bonding occurs between the metallic powder and the substrate and between the metallic powder and the film (or the metallic powder which has already adhered to the substrate).

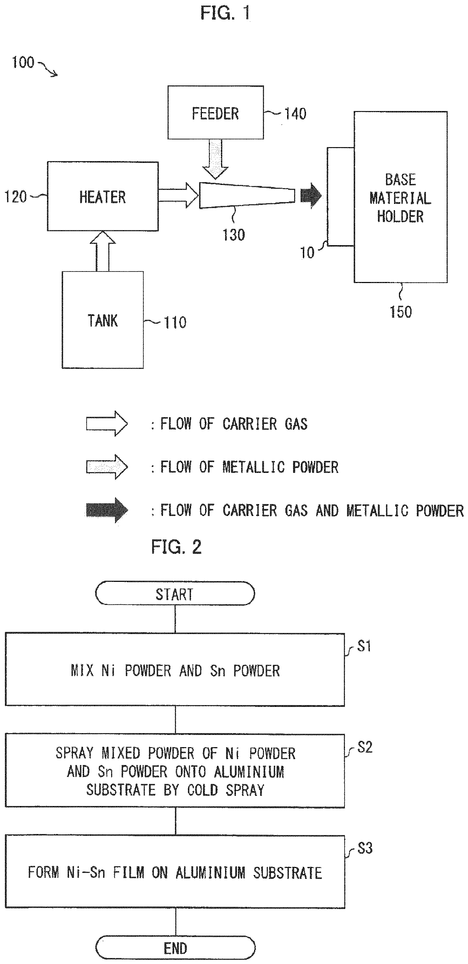

A cold spray device 100 in accordance with an embodiment of the present invention is described below with reference to Fig. 1.

### (Cold spray device 100)

Fig. 1 is a view schematically illustrating the cold spray device 100. As illustrated in Fig. 1, the cold spray device 100 includes a tank 110, a heater 120, a nozzle 130, a feeder 140, a base material holder 150, and a control device (not illustrated).

The tank 110 stores therein a carrier gas. The carrier gas is supplied from the tank 110 to the heater 120. Examples of the carrier gas include nitrogen, helium, air, or a mixed gas of nitrogen, helium, and air. A pressure of the carrier gas is adjusted so that the pressure is, for example, not less than 70 PSI and not more than 150 PSI (not less than approximately 0.48 Mpa and not more than approximately 1.03 Mpa) at an exit of the tank 110. Note, however, that the pressure of the carrier gas at the exit of the tank 110 does not necessarily need to fall within the above range, and is appropriately adjusted in accordance with, for example, material(s) and/or a size of metallic powder, or material(s) of a substrate.

The heater 120 heats the carrier gas which has been supplied from the tank 110. More specifically, the carrier gas is heated to a temperature that is lower than a melting point of the metallic powder which is supplied from the feeder 140 to the nozzle 130. For example, the carrier gas which is subjected to measurement at an exit of the heater 120 is heated to a temperature in a range of not less than 50°C and not more than 500°C, and preferably of not less than 150°C and not more than 250°C. Note, however, that a heating temperature of the carrier gas does not necessarily need to fall within the above range, and is appropriately adjusted in accordance with, for example, the material(s) and/or the size of the metallic powder, or the material(s) of the substrate.

The carrier gas is heated by the heater 120 and then is supplied to the nozzle 130.

The nozzle 130 (i) causes an increase in speed of the carrier gas which has been heated by the heater 120 to a speed in a range of not less than 300 m/s and not more than 1200 m/s and (ii) causes the carrier gas whose speed has been increased to be sprayed therethrough onto a base material 10. Note, however, that the speed of the carrier gas does not necessarily need to fall within the above range, and is appropriately adjusted in accordance with, for example, the material(s) and/or the size of the metallic powder, or the material(s) of the substrate.

The feeder 140 supplies the metallic powder to the flow of the carrier gas whose speed is increased by the nozzle 130. The metallic powder which is supplied from the feeder 140 has a particle size of, for example, not less than 1 µm and not more than 50 µm. Together with the carrier gas, the metallic powder which has been supplied from the feeder 140 is sprayed through the nozzle 130 onto the base material 10.

The base material holder 150 fixes the base material 10. Onto the base material 10 which has been fixed by the base material holder 150, the carrier gas and the metallic powder are sprayed through the nozzle 130. A distance between a surface of the base material 10 and a tip of the nozzle 130 is adjusted so that the distance falls within a range of, for example, not less than 5 mm and not more than 30 mm. Note, however, that the distance between the surface of the base material 10 and the tip of the nozzle 130 does not necessarily need to fall within the above range, and is appropriately adjusted in accordance with, for example, the material(s) and/or the size of the metallic powder, or the material(s) of the substrate.

The control device controls the cold spray device 100 in accordance with information stored therein in advance and/or an input by an operator. Specifically, the control device controls, for example, (i) the pressure of the carrier gas which is supplied from the tank 110 to the heater 120, (ii) the temperature of the carrier gas which is heated by the heater 120, and a kind and an amount of the metallic powder which is supplied from the feeder 140, and/or the distance between the surface of the base material 10 and the nozzle 130.

### (Formation of metal film on aluminium substrate 30)

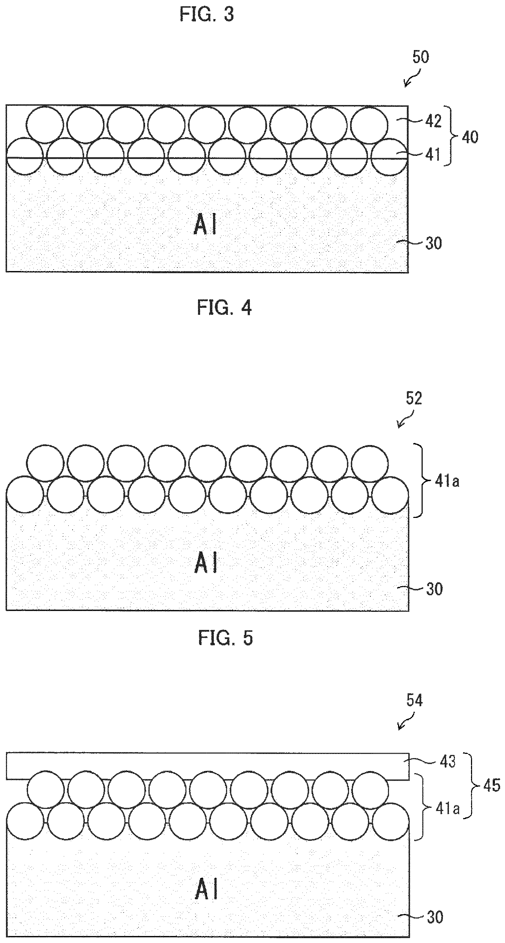

With reference to Figs. 2 and 3, the following description discusses, for example, a method in which the cold spray method is used to form a metal film 40 on an aluminium substrate 30 by spraying, onto the aluminium substrate 30, a mixed powder material, which is a mixture of Ni powder 41 (a first powder material) and Sn powder 42 (a second powder material).

Fig. 2 is a flowchart of formation of the metal film 40 on the aluminium substrate 30. Fig. 3 is a view schematically illustrating a solder connection structure 50 in which the metal film 40 is provided on the aluminium substrate 30. Note that the metal film 40 can be made of a mixed powder material, which is a mixture of (i) the first powder material which contains any of Ni, gold (Au), zinc (Zn), silver (Ag), and copper (Cu), or an alloy of two or more kinds thereof and (ii) the second powder material which contains Sn or an Sn-containing alloy. For convenience, the following description assumes that the metal film 40 is made of the Ni powder 41 and the Sn powder 42 in Figs. 2 and 3.

As shown in Fig. 2, the Ni powder 41 and the Sn powder 42 are mixed together (S1).

Next, mixed powder of the Ni powder 41 and the Sn powder 42 is sprayed onto the aluminium substrate 30 by the cold spray method (S2). As a result, the metal film 40 is formed on the aluminium substrate 30 (S3). Note that S1 to S3 are specifically described later (in Examples).

Fig. 3 is a view schematically illustrating the solder connection structure 50 in which the metal film 40 is provided on the aluminium substrate 30. As illustrated in Fig. 3, the solder connection structure 50 includes the aluminium substrate 30 and the metal film 40 which is provided on the aluminium substrate 30. The metal film 40 is formed on the aluminium substrate 30 by cold spraying the mixed powder material of the Ni powder 41 and the Sn powder 42.

Sn is lower in melting point than Ni. Thus, the Sn powder 42 which is cold sprayed is highly likely to be in a semi-molten state, and Sn enters a space between respective Ni particles so as to carry out a function of coupling the Ni particles. Further, the function of Sn allows the metal film 40 to have a surface that has fewer irregularities.

### (Example 1)

The following description discusses Example 1 in accordance with an embodiment of the present invention. The solder connection structure illustrated in Fig. 3 is formed under, for example, the following conditions.

In Example 1, the aluminium substrate 30 illustrated in Fig. 3 corresponds to the base material 10 illustrated in Fig. 1. The aluminium substrate 30 is a plate material made of aluminium, is rectangular, and has a thickness of 0.5 mm.

In Example 1, the mixed powder material, which is a mixture of the Ni powder 41 and the Sn powder 42, is used. The Ni powder 41 has an average particle size of approximately 10 µm, and the Sn powder 42 has an average particle size of approximately 38 µm. The Ni powder 41 and the Sn powder 42 are mixed together in an Ni to Sn weight ratio of 95:5. The mixed powder material is sprayed through the nozzle 130 onto the aluminium substrate 30.

A distance between the tip of the nozzle 130 and the aluminium substrate 30 is 10 mm.

From the tank 110, air is supplied as the carrier gas. The pressure of the carrier gas is set at 120 PSI (approximately 0.83 Mpa) at the exit of the tank 110. The heater 120 has a preset temperature of 250°C, and the carrier gas which contacts Ni and Sn has a temperature that is lower than each of the melting point (1453°C) of Ni and the melting point (231.97°C) of Sn.

The mixed powder material which is sprayed through the nozzle 130 onto the aluminium substrate 30 reaches the aluminium substrate 30 at a temperature of approximately 103°C.

The solder connection structure 50 illustrated in Fig. 3 is thus formed under the above conditions.

### (Comparative Example 1)

The following description discusses Comparative Example 1 with reference to Fig. 4. Fig. 4 is a view schematically illustrating a solder connection structure 52 in accordance with Comparative Example 1.

According to Comparative Example 1, an aluminium substrate 30 is a plate material made of aluminium, is rectangular, and has a thickness of 0.5 mm. Ni powder 41 has an average particle size of approximately 10 µm and is sprayed through a nozzle 130 onto the aluminium substrate 30.

A distance between a tip of the nozzle 130 and the aluminium substrate 30 is 10 mm.

From a tank 110, air is supplied as a carrier gas. The pressure of the carrier gas is set at 120 PSI (approximately 0.83 Mpa) at an exit of the tank 110. A heater 120 has a preset temperature of 350°C, and the carrier gas which contacts Ni has a temperature that is lower than the melting point (1453°C) of Ni.

Fig. 4 schematically illustrates the solder connection structure 52 which is formed under the above conditions. As illustrated in Fig. 4, the solder connection structure 52 includes the aluminium substrate 30 and an Ni film 41a which is cold sprayed onto the aluminium substrate 30. The Ni film 41a consists of an aggregate of Ni particles, and a gap is made between the respective Ni particles. Thus, the Ni film 41a has many irregularities on a surface thereof.

### (Comparative Example 2)

The following description discusses Comparative Example 2 with reference to Fig. 5. Fig. 5 is a view schematically illustrating a solder connection structure 54 in accordance with Comparative Example 2.

According to Comparative Example 2, an aluminium substrate 30 is a plate material made of aluminium, is rectangular, and has a thickness of 0.5 mm. Ni powder 41 has an average particle size of approximately 10 µm, and Sn powder 42 has an average particle size of approximately 38 µm. The Ni powder 41 and the Sn powder 42 are sprayed, in this order, through a nozzle 130 onto the aluminium substrate 30.

A distance between a tip of the nozzle 130 and the aluminium substrate 30 is 10 mm.

A pressure of a carrier gas is set at 120 PSI (approximately 0.83 Mpa) at an exit of a tank 110 in either of a case where the Ni powder 41 is sprayed through the nozzle 130 and a case where the Sn powder 42 is sprayed through the nozzle 130.

Regarding a heating temperature of the carrier gas, in a case where the Ni powder 41 is sprayed through the nozzle 130, a heater 120 has a preset temperature of 350°C, and the carrier gas which contacts Ni has a temperature that is lower than the melting point (1453°C) of Ni. Meanwhile, in a case where the Sn powder 42 is sprayed through the nozzle 130, the heater 120 has a preset temperature of 250°C, and the carrier gas which contacts Sn has a temperature that is lower than the melting point (231.97°C) of Sn.

The Ni powder 41 which is sprayed through the nozzle 130 onto the aluminium substrate 30 reaches the aluminium substrate 30 at a temperature of approximately 200°C. Meanwhile, the Sn powder 42 which is sprayed through the nozzle 130 onto the aluminium substrate 30 reaches the aluminium substrate 30 at a temperature of approximately 103°C.

Fig. 5 schematically illustrates the solder connection structure 54 which is formed under the above conditions. As illustrated in Fig. 5, the solder connection structure 54 includes the aluminium substrate 30 and a metal film 45. The metal film 45 includes (i) an Ni film 41a that is provided on the aluminium substrate 30 and (ii) an Sn film 43 that is provided on the Ni film 41a. The Ni film 41a consists of an aggregate of Ni particles, and a gap is made between the respective Ni particles. Thus, the Ni film 41a has many irregularities on a surface thereof. The Sn film 43 is provided on the Ni film 41a.

Sn is lower in melting point than Ni. Thus, the Sn powder 42 which is cold sprayed is highly likely to be in a semi-molten state. This causes the Sn film 43 to have a surface that has fewer irregularities than the surface of the Ni film 41a.

### (Evaluation of wettability by Sn bath)

The following description discusses a wettability evaluation test on each of the solder connection structures formed in Example (Fig. 3), Comparative Example 1 (Fig. 4), and Comparative Example 2 (Fig. 5), respectively.

The wettability evaluation test is carried out as below. Specifically, in view of the fact that many of solder materials are Sn-based metals, a film-formed surface to which flux for removing an oxide film is applied is immersed, for 5 seconds, in a crucible in which Sn is melted. The wettability evaluation test is thus carried out. Note here that the "film-formed surface" refers to a surface of each of the solder connection structure 50, the solder connection structure 52, and the solder connection structure 54 on which surface a metal film is formed by cold spray.

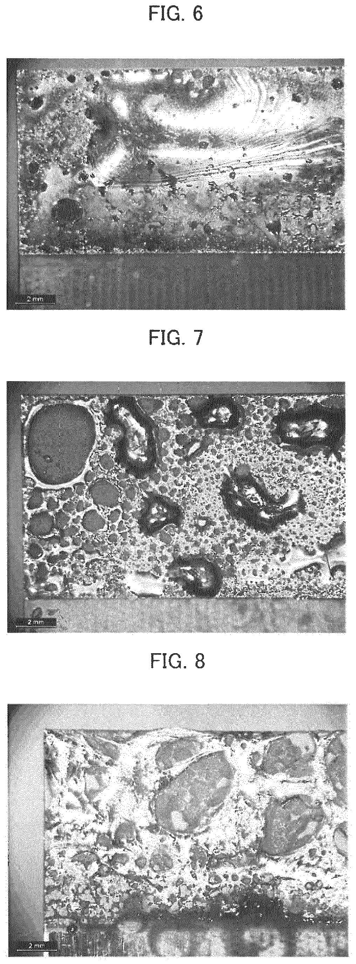

The following description discusses results of the wettability evaluation test with reference to Figs. 6 to 8. Fig. 6 is a photograph showing a state of the solder connection structure 50 in accordance with Example 1 which solder connection structure 50 has been immersed in the Sn bath for 5 seconds (Ni to Sn weight ratio=95:5). Fig. 7 is a photograph showing a state of the solder connection structure 52 in accordance with Comparative Example 1 which solder connection structure 52 has been immersed in the Sn bath for 5 seconds. Fig. 8 is a photograph showing a state of the solder connection structure 54 in accordance with Comparative Example 2 which solder connection structure 54 has been immersed in the Sn bath for 5 seconds.

First, a result obtained in Comparative Example 1 is described. In a case where the solder connection structure 52 in accordance with Comparative Example 1 is immersed in the Sn bath for 5 seconds, a plurality of places where the Ni film 41a, to which no Sn adheres, is exposed is found in the solder connection structure 52 (see Fig. 7). This is because of the following point.

According to the cold spray method, a film is formed by causing metallic particles to collide with a substrate at a high speed while the metallic particles are in a solid phase. Thus, according to the solder connection structure 52, an aggregate of particles of the Ni powder 41 is placed on the aluminium substrate 30 in a direction in which the Ni powder 41 is sprayed. Meanwhile, in a direction perpendicular to the direction in which the Ni powder 41 is sprayed, a gap or a recess is easily made between the respective particles of the Ni powder 41, so that the Ni film has many irregularities on a surface thereof. Thus, for, for example, (1) the reason that Ni has a lower surface density and (2) the reason that the Ni film 41a is influenced by an oxide, the solder connection structure 52 has lower solder wettability as shown by observation of Fig. 7.

Next, a result obtained in Comparative Example 2 is described. According to the solder connection structure 54 in accordance with Comparative Example 2, the Ni film 41a is formed on the aluminium substrate 30 first as described earlier with reference to Fig. 5. Next, the Sn film 43 is formed on the Ni film 41a. Sn is lower in melting point than Ni. Thus, the Sn powder 42 which is cold sprayed is highly likely to be in a semi-molten state. This causes the Sn film 43 to have a surface that has fewer irregularities than a surface of the Ni film 41a.

Note, however, that in a case where the solder connection structure 54 in accordance with Comparative Example 2 is immersed in the Sn bath for 5 seconds, a part of the Sn film 43 is melted in the Sn bath, so that a part of the Ni film 41a, which is a layer under the Sn film 43, is exposed (see Fig. 8). For the above reason, the solder connection structure 54 has lower solder wettability as shown by observation of Fig. 8.

Next, a result obtained in Example 1 is described. As described earlier with reference to Figs. 2 and 3, the solder connection structure 50 in accordance with Example 1 includes the aluminium substrate 30 and the metal film 40 which is provided on the aluminium substrate 30. The metal film 40 is formed on the aluminium substrate 30 by cold spraying the mixed powder material of the Ni powder 41 and the Sn powder 42.

Note here that Sn is lower in melting point than Ni. Thus, the Sn powder 42 which is cold sprayed is highly likely to be in a semi-molten state, and Sn enters a space between respective Ni particles so as to carry out a function of coupling the Ni particles.

Fig. 6 shows a result obtained in a case where the solder connection structure 50 is immersed in the Sn bath for 5 seconds. In the solder connection structure 50 which is observed after being immersed in the Sn bath for 5 seconds, few places where the Ni layer is exposed are found. This reveals that Example 1 has higher solder wettability than Comparative Examples 1 and 2.

### (Remark 1)

The following is the reason why the solder connection structure 52 and the solder connection structure 54 are employed as respective Comparative Examples 1 and 2.

### (1) Comparative Example 1

A connection structure in which Ni powder is cold sprayed onto an aluminium substrate is regarded as a conventional technique. Note, however, that the inventors of the present invention found (a) that the connection structure has unfavorable solder wettability and (b) that the reason for the above (a) seems to be because Ni has a low surface density. In order to confirm the above (a) and (b), the inventors of the present invention employed the solder connection structure 52 as Comparative Example 1.

### (2) Comparative Example 2

The inventors of the present invention studied a possibility that the above (a) of Comparative Example 1 will be overcome by forming an Ni film on an aluminium substrate and forming an Sn film on the Ni film.

### (Remark 2)

The above-described comparative test is not in conformity with "JIS C60068-2-54•JIS Z3198-4" in which a solder checker for evaluating wettability of each of molten solder and an electronic component is used. This is because evaluation of solder wettability by appearance observation is also highly reliable.

### (Mixing ratio between Ni powder and Sn powder)

The following description discusses an influence of a mixing ratio between the Ni powder 41 and the Sn powder 42 on solder wettability. In Example 1, the Ni powder 41 and the Sn powder 42 are mixed together in an Ni to Sn weight ratio of 95:5. In light of this, the following description discusses, with reference to Fig. 6 and Figs. 9 to 12, solder wettability obtained in a case where the mixing ratio between the Ni powder 41 and the Sn powder 42 is changed to respective Ni to Sn weight ratios of the following five cases.
(Case 1) Ni:Sn=95:5
(Case 2) Ni:Sn=90:10
(Case 3) Ni:Sn=80:20
(Case 4) Ni:Sn=60:40
(Case 5) Ni:Sn=98:2

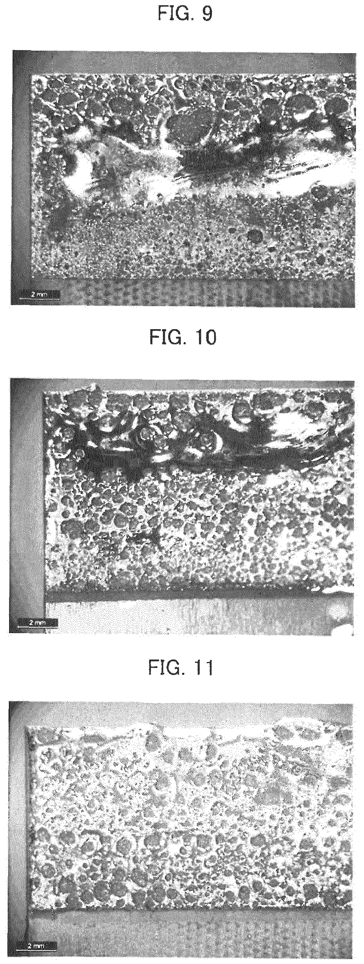

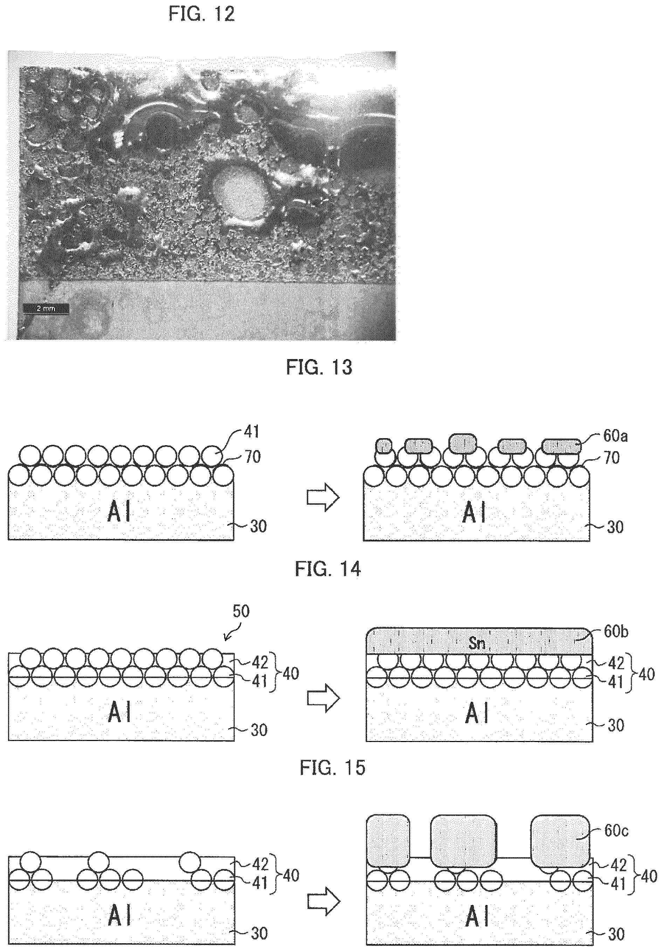

Fig. 6 is a photograph showing a state of a solder connection structure in accordance with an embodiment of the present invention which solder connection structure has been immersed in an Sn bath for 5 seconds (Ni to Sn weight ratio=95:5). Fig. 9 is a photograph showing a state of the solder connection structure in accordance with an embodiment of the present invention which solder connection structure has been immersed in the Sn bath for 5 seconds (Ni to Sn weight ratio=90:10). Fig. 10 is a photograph showing a state of the solder connection structure in accordance with an embodiment of the present invention which solder connection structure has been immersed in the Sn bath for 5 seconds (Ni to Sn weight ratio=80:20). Fig. 11 is a photograph showing a state of the solder connection structure in accordance with an embodiment of the present invention which solder connection structure has been immersed in the Sn bath for 5 seconds (Ni to Sn weight ratio=60:40). Fig. 12 is a photograph showing a state of the solder connection structure in accordance with an embodiment of the present invention which solder connection structure has been immersed in the Sn bath for 5 seconds (Ni to Sn weight ratio=98:2).

According to Figs. 6, 9, and 10, satisfactory solder wettability is obtained in Case 1 (Ni to Sn weight ratio=95:5), Case 2 (Ni to Sn weight ratio=90:10), and Case 3 (Ni to Sn weight ratio=80:20). Note, however, that according to Figs. 11 and 12, lower solder wettability is obtained in Case 4 (Ni to Sn weight ratio=60:40) and Case 5 (Ni to Sn weight ratio=98:2). Further, it is found from the results obtained in (Case 1) to (Case 5) that Sn powder which is mixed in a mixing ratio falling within a predetermined range enhances wettability. The reason for this is described below with reference to Figs. 13 to 15.

Fig. 13 is a view schematically illustrating a state of adhesion of Sn to the solder connection structure 52 before and after immersion of the solder connection structure 52 in accordance with Comparative Example 1 in the Sn bath for 5 seconds. The drawing on the left of Fig. 13 illustrates the state before the immersion in the Sn bath, and the drawing on the right of Fig. 13 illustrates the state after the immersion in the Sn bath.

As described earlier, according to the cold spray method, a film is formed by causing metallic particles to collide with a substrate at a high speed while the metallic particles are in a solid phase. Thus, according to the solder connection structure 52, an aggregate of particles of the Ni powder 41 is placed on the aluminium substrate 30 in a direction in which the Ni powder 41 is sprayed. Meanwhile, in a direction perpendicular to the direction in which the Ni powder 41 is sprayed, a gap or a recess is easily made between the respective particles of the Ni powder 41, so that the Ni film has many irregularities on a surface thereof. Thus, according to the solder connection structure 52, (1) Ni has a lower surface density and, (2) the Ni film 41a is influenced by an oxide 70 (see the drawing on the left of Fig. 13). In a case where the solder connection structure 52 thus arranged is immersed in the Sn bath for 5 seconds, Sn is less likely to adhere to the surface of the Ni film, and a part of the Ni film is exposed (as illustrated in the drawing on the right of Fig. 13, Sn 60a having adhered to the Ni film forms a non-continuous film). For the above reasons, the solder connection structure 52 in accordance with Comparative Example 1 has lower solder wettability. Same applies to Case 5 where the Sn powder is contained in the mixed powder of the Ni powder and the Sn powder in a weight ratio that is lower than the predetermined range.

Fig. 14 is a view for explaining that higher solder wettability is obtained in a case where the Sn powder 42 is contained in the mixed powder of the Ni powder 41 and the Sn powder 42 in a weight ratio that falls within a predetermined range. Cases 1, 2, and 3 each correspond to Fig. 14. It is explained below that higher solder wettability is obtained in each of Cases 1, 2, and 3.

Sn is lower in melting point than Ni. Thus, the Sn powder 42 which is cold sprayed is highly likely to be in a semi-molten state, and Sn enters a space between respective Ni particles so as to carry out a function of coupling the Ni particles. Further, the function of Sn allows a surface of the metal film 40 to be a continuous film that has fewer irregularities. Moreover, since the Ni powder 41 accounts for a high percentage of the mixed powder, the metal film 40 has a high Ni density accordingly. In addition, such an influence by the oxide 70 as described earlier with reference to Fig. 13 is less likely to be exerted on the Ni layer, which is covered with the Sn layer, which is a continuous film. Thus, in a case where such a solder connection structure is immersed in the Sn bath for 5 seconds, an Sn film 60b, which is a continuous film, is formed. This enhances solder wettability.

Fig. 15 is a view for explaining that lower solder wettability is obtained in a case where the Sn powder 42 is contained in the mixed powder of the Ni powder 41 and the Sn powder 42 in a weight ratio that is higher than the predetermined range. Case 4 corresponds to Fig. 15. It is explained below that lower solder wettability is obtained in Case 4.

Sn enters a space between a respective plurality of Ni particles so as to carry out a function of coupling the plurality of Ni particles. Further, the Sn powder 42, which is highly likely to be in a semi-molten state while being cold sprayed, allows the metal film 40 to be a continuous film that has fewer irregularities. In addition, such an influence by the oxide 70 as described earlier with reference to Fig. 13 is less likely to be exerted on the Ni layer, which is covered with the Sn layer. Note, however, that since the Ni powder 41 accounts for a low percentage of the mixed powder, the metal film 40 has a low Ni density accordingly. Thus, in Case 4, in a case where the solder connection structure corresponding to Case 4 is immersed in the Sn bath for 5 seconds, a part of the Sn film is melted in the Sn bath, so that a part of the Ni film, which is a layer under the Sn film, is exposed (as illustrated in the drawing on the right of Fig. 15, Sn 60c having adhered to the Sn film forms a non-continuous film). As a result, lower solder wettability is obtained in Case 4.

For the above reasons, in a case where the metal film 40 which contains the mixed powder of the Ni powder 41 and the Sn powder 42 is formed on the aluminium substrate 30, the solder connection structure can have higher wettability by maintaining, at not less than 80% and not more than 95%, a weight ratio in which the Ni powder is contained in the mixed powder.

### (Others)

According to the solder connection structure in accordance with an embodiment of the present invention, instead of the Ni powder, a powder material which contains any of gold (Au), zinc (Zn), silver (Ag), and copper (Cu), or an alloy of two or more kinds of Ni, Au, Zn, Ag, and Cu can be used as the first powder material. Further, according to the solder connection structure in accordance with an embodiment of the present invention, instead of the Sn powder, a powder material which contains an Sn-containing alloy can be used as the second powder material.

Note here that an "alloy" refers to a metallic mixture of a plurality of metallic elements or a metallic mixture of a metallic element and a non-metallic element. An alloy, which can be in various states, is exemplified by, for example, (1) a solid solution in which substances of the alloy are completely melted together, (2) an eutectic crystal in which metals of the alloy are independent of each other at a crystal level, and (3) an intermetallic compound in which metals of the alloy are coupled together in respective constant ratios at an atomic level. According to an embodiment of the present invention, examples of a state of an "alloy" include such various states as described above.

Further, an "aluminium substrate", which only needs to be a component or a member that allows a certain function to be carried out, can be generically referred to as an "aluminium base material". For example, the solder connection structure in accordance with an embodiment of the present invention can be used for, for example, a cell tab or a bus bar.

Examples of a technique that is generally used to join (connect) dissimilar metals mainly include a screw, soldering, and various welding techniques. Note, however, that corrosion may be caused depending on a material of a metal. For example, an aluminium base material and a copper wire which are screwed to each other may cause galvanization and consequently cause corrosion of the aluminium base material. Further, fixation by welding of an aluminium base material and a metallic material different from the aluminium base material requires a step of, for example, removing an oxide film. This requires much time and cost. In view of such a problem of a conventional technique for joining (connecting) dissimilar metals, cold spray is used for the solder connection structure in accordance with an embodiment of the present invention. This allows the solder connection structure in accordance with an embodiment of the present invention (1) to be wider in range of combination of materials than conventional plating, vapor deposition, and clad techniques, (2) to be partially processed, and (3) to be lower in cost.

The present invention is not limited to the embodiments, but can be altered by a skilled person in the art within the scope of the claims. The present invention also encompasses, in its technical scope, any embodiment derived by combining technical means disclosed in differing embodiments.

The present invention is applicable to a solder connection structure to be connected with a member via a solder material.

### Reference signs

- 10: Base material
- 30: Aluminium substrate
- 40, 45: Metal film
- 41: Ni powder (first powder material)
- 42: Sn powder (second powder material)
- 50: Solder connection structure (Example 1)
- 52: Solder connection structure (Comparative Example 1)
- 54: Solder connection structure (Comparative Example 2)
- 70: Oxide
- 100: Cold spray device
- 110: Tank
- 120: Heater
- 130: Nozzle
- 140: Feeder
- 150: Base material holder

## Claims

1. A solder connection structure (54) for connection with a member via a solder material, comprising:
- an aluminium base material (30); and
- a metal film (40) provided on the aluminium base material (30),
- the metal film (40) being formed by a cold spray method in which a mixed powder material is used, the mixed powder material being a mixture of a nickel (Ni) powder (41) and a tin (Sn) powder (42), wherein the mixed powder material contains the Ni powder (41) in a weight ratio of not less than 80% and not more than 95%.

2. A method for producing a solder connection structure according to claim 1,, the method comprising the steps of:
- providing an aluminium base material (30);
- mixing a nickel (Ni) powder (41) and a tin (Sn) powder (42) to provide a mixed powder material, wherein the mixed powder material contains the Ni powder (41) in a weight ratio of not less than 80% and not more than 95%; and
- forming the metal film on the aluminium base material by cold spraying, onto the aluminium base material (30), the mixed powder material.

3. Use of the solder connection structure (54) as set forth in claim 1 as a cell tab or a bus bar.

## Patentansprüche

1. Lötverbindungsstruktur (54) zur Verbindung mit einem Element über ein Lötmaterial, die Folgendes umfasst:
- ein Aluminiumbasismaterial (30); und
- eine Metallschicht (40), die auf dem Aluminiumbasismaterial (30) bereitgestellt ist,
- wobei die Metallschicht (40) durch ein Kaltsprühverfahren gebildet ist, bei dem ein gemischtes Pulvermaterial verwendet wird, wobei das gemischte Pulvermaterial eine Mischung aus einem Nickelpulver (Ni-Pulver) (41) und einem Zinnpulver (Sn-Pulver) (42) ist, wobei das gemischte Pulvermaterial das Ni-Pulver (41) in einem Gewichtsverhältnis von nicht weniger als 80 % und nicht mehr als 95 % enthält.

2. Verfahren zum Erzeugen einer Lötverbindungsstruktur nach Anspruch 1, wobei das Verfahren die folgenden Schritte umfasst:
- Bereitstellen eines Aluminiumbasismaterials (30);
- Mischen eines Nickelpulvers (Ni-Pulvers) (41) und eines Zinnpulvers (Sn-Pulvers) (42), um ein gemischtes Pulvermaterial bereitzustellen, wobei das gemischte Pulvermaterial das Ni-Pulver (41) in einem Gewichtsverhältnis von nicht weniger als 80 % und nicht mehr als 95 % enthält, und
- Bilden der Metallschicht auf dem Aluminiumbasismaterial durch Kaltsprühen des gemischten Pulvermaterials auf das Aluminiumbasismaterial (30).

3. Verwendung der Lötverbindungsstruktur (54) wie in Anspruch 1 dargelegt, als eine Lötfahne oder eine Stromschiene.

## Revendications

1. Structure de connexion par soudure (54) en vue d'une connexion avec un élément via un matériau de soudure, comprenant :
- un matériau de base en aluminium (30); et
- un film métallique (40) prévu sur le matériau de base en aluminium (30),
- le film métallique (40) étant formé par un procédé de pulvérisation à froid dans lequel un matériau en poudre mélangé est utilisé, le matériau en poudre mélangé étant un mélange de poudre de nickel (Ni) (41) et une poudre d'étain (Sn) (42), dans lequel le matériau en poudre mélangé contient la poudre de Ni (41) dans un rapport pondéral non inférieur à 80 % et non supérieur à 95 %.

2. Procédé de réalisation d'une structure de connexion par soudure selon la revendication 1, le procédé comprenant les étapes consistant à :
- fournir un matériau de base en aluminium (30);
- mélanger une poudre de nickel (Ni) (41) et une poudre d'étain (Sn) (42) pour fournir un matériau en poudre mélangé, dans lequel le matériau en poudre mélangé contient la poudre de Ni (41) dans un rapport pondéral non inférieur à 80 % et pas supérieur à 95 % ; et
- former le film métallique sur le matériau de base en aluminium par pulvérisation à froid, sur le matériau de base en aluminium (30), du matériau en poudre mélangé.

3. Utilisation de la structure de connexion par soudure (54) selon la revendication 1 en tant que languette de cellule ou barre omnibus.
